(19) Europäisches Patentamt / European Patent Office / Office européen des brevets

(11) **EP 2 744 277 A1**

(12) **EUROPEAN PATENT APPLICATION**
published in accordance with Art. 153(4) EPC

(43) Date of publication:
**18.06.2014 Bulletin 2014/25**

(51) Int Cl.:
***H04W 52/04*** (2009.01)

(21) Application number: **11871052.4**

(22) Date of filing: **12.08.2011**

(86) International application number:
**PCT/CN2011/078330**

(87) International publication number:
**WO 2013/023337 (21.02.2013 Gazette 2013/08)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(71) Applicant: **Fujitsu Limited**
**Kawasaki-shi, Kanagawa 211-8588 (JP)**

(72) Inventors:
• **XU, Yueqiao**
  **Beijing 100025 (CN)**
• **ZHANG, Yi**
  **Beijing 100025 (CN)**
• **WANG, Yi**
  **Beijing 100025 (CN)**
• **ZHANG, Yuantao**
  **Beijing 100025 (CN)**
• **ZHOU, Hua**
  **Beijing 100025 (CN)**

(74) Representative: **Wilding, Frances Ward**
**Haseltine Lake LLP**
**Lincoln House, 5th Floor**
**300 High Holborn**
**London WC1V 7JH (GB)**

(54) **UPLINK POWER CONTROL METHOD AND DEVICE**

(57) Embodiments of the present invention provide a method and apparatus for uplink power control. The method includes: transmitting, by user equipment, a sounding reference signal (SRS) to a network side according to a received triggering signal; receiving, by the user equipment, a path loss compensation value calculated based on the SRS and transmitted by the network side; estimating, by the user equipment, a path loss value according to a received cell-specific reference signal (CRS); and performing, by the user equipment, power compensation according to the path loss compensation value and the path loss value. In the present invention, on the basis of the original uplink power control performed according to the path loss estimated based on the downlink CRSs, the network side estimates the path loss compensation value of the UE by triggering the RRH UE to transmit aperiodic SRSs, and informs the UE in a semi-static manner, thereby compensating for the inaccuracy of estimation of path loss and ensuring the efficiency of power control.

transmitting, by user equipment, a sounding reference signal (SRS) to a network side according to a received triggering signal — 301

receiving, by the user equipment, a path loss compensation value calculated by the network side based on the SRS and transmitted by the network side — 302

estimating, by the user equipment, a path loss value according to a received cell-specific reference signal (CRS) — 303

performing, by the user equipment, power compensation according to the path loss compensation value and the path loss value — 304

Fig.3

EP 2 744 277 A1

**Description**

Technical Field

The present invention relates to the field of communications, and in particular to a method and apparatus for uplink power control in a heterogeneous deployment network.

Background Art

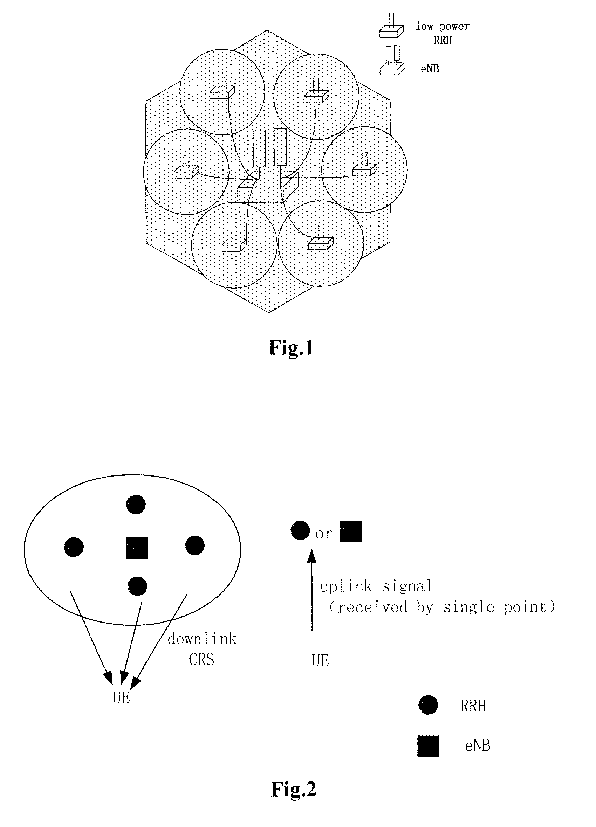

In a long-term evolution-advanced (LTE-A) system, much attention is paid to an application scenario of coordinated multi-point (CoMP) transmission shown in Fig. 1. As shown in Fig. 1, such a scenario is a heterogeneous deployment network scenario, in which multiple low power remote radio heads (RRHs) coexist with an evolved Node B (eNB) in one cell with a same cell ID, the RRHs and the eNB being connected via optical fibers, and the eNB having a function of a centralized controller.

Among research points regarding the above scenario, one is an issue of uplink power control.

Uplink power control is used to compensate for path loss and shadow, as well as suppress inter-cell interference. In an LTE Rel-8/10 standard, uplink power control is targeted for a homogeneous network, that is, a cell scenario covered by one eNB. Taking a physical uplink shared channel (PUSCH) as an example, an expression of uplink power control is:

$$P_{\text{PUSCH}} = \min(P_{\max}, 10\log_{10} M + P_{\text{O\_PUSCH}} + \alpha \cdot PL + \Delta_{\text{TF}} + f(i)) \, [\text{dBm}] \qquad (1)$$

where, $P_{\max}$ is configured maximum transmission power of user equipment (UE); M is the number of allocated resource blocks (RBs) for the UE; $P_{\text{O\_PUCH}}$ includes two parts: one part is a cell-specific parameter $P_{\text{O\_NOMINAL\_PUSCH}}$ provided by a higher layer, and the other part is a UE-specific parameter $P_{\text{O\_UE\_PUSCH}}$, that is, $P_{\text{O\_PUSCH}} = P_{\text{O\_NOMINAL\_PUSCH}} + P_{\text{O\_UE\_PUSCH}}$; $\alpha$ is a 3-bits path loss compensation factor informed by the higher layer to the UE; and $PL$ is a path loss value estimated by the UE based on a downlink cell-specific reference signal (CRS), the expression of a dB value of which being $PL(dB) = referenceSignalPower^{dB} - higherlayerfilterdRSRP^{dB}$, where, RSRP (reference signal receiving power) denoting signal power of the UE for receiving the CRS.

However, in the heterogeneous deployment network scenario shown in Fig. 1, the transmission power of the UE cannot be efficiently controlled in the original method for uplink power control in which path loss is estimated based on a CRS, as multiple low power RRHs and an eNB coexist in one cell in such a scenario. On the basis of the current progress of LTE-A standardization and common understanding of various corporations, in order to correctly demodulate physical downlink control channels (PDCCHs) of all the UE in the cell, all the transmission points (including the RRHs and the eNB) in the cell transmit CRSs at the same time, as shown in Fig. 2. In a heterogeneous deployment network scenario, an expression of power of certain UE for receiving a CRS is:

$$RSRP = \frac{Tx_0^{linear}}{PL_0^{linear}} + \sum_{i=1}^{N} \frac{Tx_{RRHi}^{linear}}{PL_i^{linear}} \qquad (2)$$

where, $Tx_0^{linear}$ denotes a linear value of the power of the eNB for transmitting a CRS, $Tx_{RRHi}^{linear}$ denotes a linear value of the power of an *i-th* RRH for transmitting a CRS, $PL_0^{linear}$ denotes a linear value of path loss between the UE and the eNB, and $PL_i^{linear}$ denotes a linear value of path loss between the UE and the *i-th* RRH.

It was found by the inventors in the implementation of the present invention that on the one hand, as RRHs and an eNB have different transmission power levels, taking a 10MHz system bandwidth as an example, the transmission power of an eNB is 46 dBm, and the transmission power of an RRH is 30 dBm, it is not currently defined that whether the setting of a system message (reference signal power) characterizing transmission power for transmitting a CRS is based on the transmission power of the eNB for transmitting a CRS or based on the transmission power of an RRH for transmitting a CRS. And on the other hand, for certain UE of uplink single point (a certain RRH or eNB) receiving, it receives CRSs transmitted by all the transmission points of a cell in a downlink, but receiving in an uplink by only one point. Therefore, the uplink and the downlink are asymmetrical, and there exists an error in estimating path loss, as the path loss value estimated based on a downlink CRS is not real uplink single-link path loss in the original LTE standard.

It should be noted that the above description of the background art is merely provided for clear and complete explanation of the present invention and for easy understanding by those skilled in the art. And it should not be understood that the above technical solution is known to those skilled in the art as it is described in the background art of the present invention.

Summary of the Invention

The embodiments of the present invention provide a method and apparatus for uplink power control in a heterogeneous deployment network, so as to solve the above problem identified in the prior art.

According to one aspect of the embodiments of the present invention, there is provided a method for uplink power control, including: transmitting, by user equipment, a sounding reference signal (SRS) to a network side according to a received triggering signal; receiving, by the user equipment, a path loss compensation value calculated by the network side based on the SRS and transmitted by the network side; estimating, by the user equipment, a path loss value according to a received cell-specific reference signal (CRS); and performing, by the user equipment, power compensation according to the path loss compensation value and the path loss value.

According to another aspect of the embodiments of the present invention, there is provided a method for uplink power control, including: a triggering step: transmitting aperiodically by a network side a triggering signal to user equipment, so as to trigger the user equipment to transmit a sounding reference signal (SRS); a processing step: receiving by the network side the SRS transmitted by the user equipment and calculating a path loss compensation value based on the SRS; and a transmitting step: transmitting by the network side the path loss compensation value to the user equipment, so that the user equipment performs power compensation according to the path loss compensation value and an estimated path loss value.

According to still another aspect of the embodiments of the present invention, there is provided user equipment, including: a transmitting unit configured to transmit a sounding reference signal (SRS) to a network side according to a received triggering signal; a receiving unit configured to receive a path loss compensation value calculated by the network side based on the SRS and transmitted by the network side; an estimating unit configured to estimate a path loss value according to a received cell-specific reference signal (CRS); and a calculating unit to perform power compensation according to the path loss compensation value and the path loss value.

According to further still another aspect of the embodiments of the present invention, there is provided a base station, including: a triggering unit configured to control a remote radio head (RRH) accessed by user equipment to aperiodically trigger the user equipment to transmit a sounding reference signal (SRS); a processing unit configured to calculate a path loss compensation value according power for receiving the SRS; and a transmitting unit configured to transmit the path loss compensation value to the user equipment, so that the user equipment performs power compensation according to the path loss compensation value and an estimated path loss value.

The advantage of the embodiments of the present invention resides in that on the basis of performing original uplink power control according to a path loss estimated based on downlink CRS, the network side estimates a path loss compensation value of UE by triggering RRH UE to transmit aperiodic SRSs, and semi-statically informs the UE, so as to compensate for the inaccuracy of estimation of path loss, thereby ensuring the efficiency of power control.

With reference to the following description and drawings, the particular embodiments of the present invention are disclosed in detail, and the principle of the present invention and the manners of use are indicated. It should be understood that the scope of the embodiments of the present invention is not limited thereto. The embodiments of the present invention contain many alternations, modifications and equivalents within the spirits and scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "includes/including" when used in this specification is taken to specify the presence of stated features, integers, steps or components but does not preclude the presence or addition of one or more other features, integers, steps, components or groups thereof.

Brief Description of the Drawings

Many aspects of the invention can be better understood with reference to the following drawings. The components in the drawings are not necessarily to scale, emphasis instead being placed upon clearly illustrating the principles of the present invention. To facilitate illustrating and describing some parts of the invention, corresponding portions of the drawings may be exaggerated or reduced in size, e.g., made larger in relation to other parts than in an exemplary device actually made according to the invention. Elements and features depicted in one drawing or embodiment of the invention may be combined with elements and features depicted in one or more additional drawings or embodiments.

Moreover, in the drawings, like reference numerals designate corresponding parts throughout the several views and may be used to designate like or similar parts in more than one embodiment. In the drawings:

Figure 1 is a schematic diagram of sharing the same cell ID by RRHs and an eNB in a heterogeneous deployment network scenario;
Figure 2 is a schematic diagram of uplink and downlink signals;
Figure 3 is a flowchart of a method for power control provided by an embodiment of the present invention;
Figure 4 is a flowchart of another method for power control provided by an embodiment of the present invention;
Figure 5 is a schematic diagram of the structure of UE provided by an embodiment of the present invention; and
Figure 6 is a schematic diagram of the structure of a base station provided by an embodiment of the present invention.

Detailed Description of the Invention

Foregoing and other features of the embodiments of the present invention will become apparent with reference to the drawings and the following description. These embodiments are illustrative only and are not intended to limit the present invention. For easy understanding of the principle and embodiments of the present invention by those skilled in the art, the embodiments of the present invention shall be described taking a method for uplink power control in a heterogeneous deployment network scenario of CoMP transmission in an LTE-A system as an example. However, it should be understood that the embodiments of the present invention are not limited thereto, and are applicable to other heterogeneous deployment network systems related to transmission points with different power levels and sharing the same cell ID.

In the heterogeneous deployment network scenario shown in Fig. 1, for UE accessed to an eNB in an uplink, i.e. macro UE, an error between a path loss (PL) value estimated based on CRSs transmitted by all the transmission points in a cell covered by the eNB and the real value is relatively small. Hence, the method for uplink power control in such a scenario may follow a method for power control in a homogeneous deployment network scenario of LTE system. While for UE accessed to a certain RRH in an uplink, i.e. RRH UE, there exists an error between a PL value estimated based on CRSs transmitted by all the downlink transmission points and the real value, and a conventional method for uplink power control cannot control the transmission power of the RRH UE effectively. Hence, inter-cell interference cannot be efficiently suppressed.

An embodiment of the present invention proposes a method for uplink power control, addressed to RRH UE in a heterogeneous deployment network scenario of CoMP transmission, as described in embodiments 1 and 2 below.

Embodiment 1

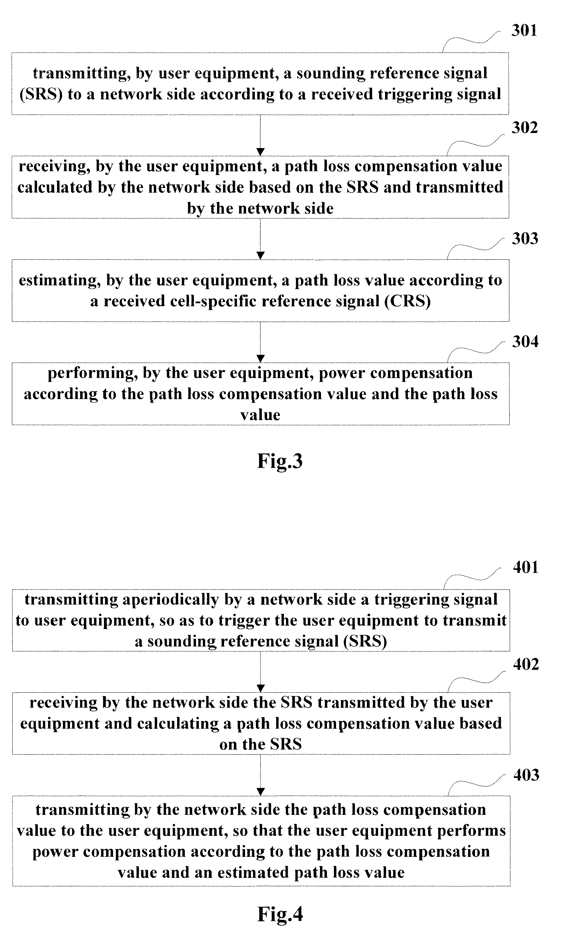

Fig. 3 is a flowchart of a method for uplink power control provided by an embodiment of the present invention, applicable to UE accessed to a certain RRH in a heterogeneous deployment network scenario of CoMP transmission. Referring to Fig. 3, the method includes:

step 301: transmitting, by user equipment, a sounding reference signal (SRS) to a network side according to a received triggering signal;
step 302: receiving, by the user equipment, a path loss compensation value calculated by the network side based on the SRS and transmitted by the network side;
step 303: estimating, by the user equipment, a path loss value according to a received cell-specific reference signal (CRS); and
step 304: performing, by the user equipment, power compensation according to the path loss compensation value and the path loss value.

In step 301, the network side will aperiodically trigger the UE of this embodiment to transmit SRSs. In an embodiment, the eNB has a function of centralized control, which configures the UE with related information for transmitting SRSs, and controls the RRH to which the UE accesses to aperiodically transmit triggering signals. The UE aperiodically transmits uplink SRSs after receiving the triggering signals. The triggering signals here may be carries by RRC signaling; however, this embodiment is not limited thereto.

In step 302, the network side will calculate a path loss compensation value $\Delta PL$ according to the SRSs after receiving the SRSs, and transmit the calculated path loss compensation value $\Delta PL$ to the UE of this embodiment. In an embodiment, all the transmission points of the network side receive the SRSs, the RRHs among which inform the power for receiving the SRSs to the eNB among which via backhaul, and the eNB calculates the path loss compensation value $\Delta PL$ and controls the RRH to which the UE accesses to transmit the $\Delta PL$ to the UE in a semi-static manner.

In steps 301 and 302, processing related to the network side shall be described in detail in an embodiment below.

In step 303, the UE receives the CRSs transmitted by all the transmission points (including the RRHs and the eNB) of the network side, and then estimates a PL value according to RSRP of the CRSs and a system message (such as reference signal power).

In this embodiment, in order to be compatible with an LTE version, the system message (such as reference signal power) is defined as power of the eNB for transmitting a CRS, that is, in this embodiment, the setting of the system message (such as reference signal power) characterizing transmission power for transmitting a CRS is based on the power of the eNB for transmitting a CRS.

In this embodiment, as describe above, for a UE accessed to a certain RRH in an uplink, i.e. RRH UE, there exists an error $\Delta PL$ between a PL value estimated based on CRSs transmitted by all the transmission points in downlink and the real value, which needs to be compensated.

In step 304, the UE may perform power compensation for a physical uplink control channel (PUCCH) according to the path loss compensation value and the path loss value, and may perform power compensation for a physical uplink shared channel (PUSCH) according to the path loss compensation value and the path loss value.

According to the method of this embodiment, the UE compensates for the path loss compensation value $\Delta PL$ on the basis of the path loss estimated based on the CRS, and takes $PL+\Delta PL^{dB}$ as the $PL$ in the power control formula, thereby compensating for the inaccuracy of estimation of path loss in a heterogeneous deployment network scenario of CoMP transmission and ensuring the efficiency of power control.

In this embodiment, the power compensation for the PUSCH may be performed by using the formula below:

$$P_{\text{PUSCH}} = \min(P_{\max}, 10\log_{10} M + P_{\text{O\_PUSCH}} + \alpha \cdot (PL + \Delta PL^{dB}) + \Delta_{\text{TF}} + f(i)) \qquad (3)$$

where, $P_{\max}$ is configured maximum transmission power of the UE, M is the number of RBs allocated to the UE, $P_{\text{O\_PUSCH}}$ is a sum of a cell-specific parameter $P_{\text{O-NOMINAL\_PUSCH}}$ provided by a higher layer and a UE-specific parameter $P_{\text{O\_UE\_PUSCH}}$, $\alpha$ is a 3-bit path loss compensation factor, $PL$ is the path loss value estimated in step 303, $\Delta PL^{dB}$ is the path loss compensation value received in step 302, $\Delta_{\text{TF}}$ is a parameter related to the uplink transmission format of the UE, permitting the transmission power of each RB to be adaptive to the transmission data rate of the UE, and $f(i)$ is a close-loop power control factor in the uplink power control, for adjusting the uplink power of the UE slightly, so as to reach a faster adaptive channel condition.

In formula (3), $PL+\Delta PL^{dB}$ replaces the PL in formula (1).

In this embodiment, the power compensation for the PUCCH may be performed by using the formula below:

$$P_{\text{PUCCH}}(i) = \min\left\{ \begin{array}{l} P_{\text{CMAX}}, \\ P_{\text{O\_PUCCH}} + (PL + \Delta PL^{dB}) + h\left(n_{CQI}, n_{HARQ,} n_{SR}\right) + \Delta_{\text{F\_PUCCH}}(F) + \Delta_{TxD}(F') + g(i) \end{array} \right\} \qquad (4)$$

where, $P_{\text{CMAX}}$ denotes maximum transmission power of the UE, $\Delta_{\text{F\_PUCCH}}(F)$ is a message informed by a higher layer, related to the format of the PUCCH; if the UE is configured by the higher layer to transmit PUCCHs at two antenna ports, $\Delta_{TxD}(F')$ is informed by the higher layer, where, F' denotes the format of the PUCCH; $h(n_{CQI}, n_{HARQ}, n_{SR})$ is a parameter related to the format of the PUCCH; $P_{\text{O\_PUCCH}}$ is similar to $P_{\text{O\_PUSCH}}$, including two parts, that is $P_{\text{O\_PUCCH}} = P_{\text{O\_NOMINAL\_PUCCH}} + P_{\text{O\_UE\_PUCCH}}$, Where, $P_{\text{O\_NOMINAL\_PUCCH}}$ is a cell-specific parameter, and $P_{\text{O-UE\_PUCCH}}$ is a UE-specific parameter, $g(i)$ is a close-loop control factor, similar to $f(i)$ in the power control of the PUSCH; $PL$ is the path loss value estimated in step 303; and $\Delta PL^{dB}$ is the path loss compensation value received in step 302.

In formula (4), $PL + \Delta PL^{dB}$ replaces the PL in formula (5) for the power control of the PUCCH.

$$P_{\text{PUCCH}}(i) = \min\left\{ \begin{array}{l} P_{\text{CMAX}}, \\ P_{\text{O\_PUCCH}} + PL + h\left(n_{CQI}, n_{HARQ,} n_{SR}\right) + \Delta_{\text{F\_PUCCH}}(F) + \Delta_{TxD}(F') + g(i) \end{array} \right\} \qquad (5)$$

With the method for uplink power control of this embodiment, the UE aperiodically transmits SRSs to the network side according to the aperiodic triggering signals from the network side, then receives the path loss compensation value estimated by the network side, and performs the power compensation according to the path loss compensation value on the basis of the original uplink power control performed according to the path loss estimated based on the downlink CRSs, thereby compensating for the inaccuracy of estimation of path loss and ensuring the efficiency of power control.

Corresponding to the processing at the UE end of Embodiment 1, an embodiment of the present invention further provides a method for uplink power control, as described in Embodiments 2 below.

Embodiment 2

Fig. 4 is a flowchart of a method for uplink power control provided by an embodiment of the present invention, applicable to a network side in a heterogeneous deployment network scenario of CoMP transmission. Referring to Fig. 4, the method includes:

a triggering step 401: transmitting aperiodically by a network side a triggering signal to user equipment, so as to trigger the user equipment to transmit a sounding reference signal (SRS);

a processing step 402: receiving by the network side the SRS transmitted by the user equipment and calculating a path loss compensation value based on the SRS; and

a transmitting step 403: transmitting by the network side the path loss compensation value to the user equipment, so that the user equipment performs power compensation according to the path loss compensation value and an estimated path loss value.

In step 401, the eNB at the network side has a function of centralized control, which configures the UE with related information for transmitting aperiodic SRSs, and controls the RRH to which the UE accesses to aperiodically transmit triggering signals, so as to trigger the UE to transmit the aperiodic SRSs. The triggering signals may be carried by a radio resource control (RRC) message; wherein, the RRC message carries the related configuration information of the UE for transmitting aperiodic SRSs, such as a bandwidth, and a subframe, etc.

In step 402, the eNB at the network side may control at least one RRH having the same cell ID as that of the eNB to receive the SRSs transmitted by the UE, receive power for receiving the SRSs transmitted by the at least one RRH, and calculate the path loss compensation value according to power of all the points (including the eNB itself and the at least one RRH) for receiving the SRSs.

In the embodiment, the at least one RRH may be all the RRHs having the same cell ID as that of the eNB, and may also be a part of the RRHs having the same cell ID as that of the eNB that are predetermined according to a predefined policy (such as distance); however, this embodiment is not limited thereto.

In the embodiment, in such a heterogeneous deployment network scenario, the eNB and all the RRHs are connected by optical fibers, in which the eNB end may notify all the RRHs to receive the SRSs transmitted by this UE via a backhaul, and all the RRHs may inform the eNB of the respective power for receiving the SRSs via the backhaul. The eNB may calculate the path loss compensation value $\Delta PL$ according to the power of each RRH for receiving the SRSs and the power of the eNB for receiving the SRSs.

In an embodiment, taking that the UE accesses to RRH 1 in an uplink, that is, RRH 1 receives the uplink signals of the UE, as an example, the eNB may calculate the path loss compensation value $\Delta PL$ of the UE according the formula below:

$$\Delta PL = \frac{PL_1^{linear}}{PL_{estimate}^{linear}} = \frac{Rx_0}{Rx_{RRH1}} + \frac{1}{\Delta T_1} + \frac{1}{\Delta T_i} \sum_{i=2}^{N} \frac{Rx_{RRHi}}{Rx_{RRH1}} \tag{6}$$

where, $Rx_0$ denotes a power value of the eNB for receiving the SRSs transmitted by the UE, $Rx_{RRHi}$ ($i$=1,2,...$N$) denotes power of an $i$-th RRH for receiving the SRSs transmitted by the UE, and $\Delta T_i = \dfrac{Tx_0^{linear}}{Tx_{RRHi}^{linear}}$ ($i = 1, 2, ... N$) denotes a ratio of the power of the eNB for transmitting CRSs and the power of the $i$-th RRH for transmitting CRSs. In a case where the eNB and all the RRHs are not CRS power enhanced, taking a 10 MHz system bandwidth as an example, the total transmission power of the eNB is 46 dBm, the total transmission power of each RRH is 30 dBm, and the difference between the power of the eNB and the power of each RRH for transmitting CRSs is 16 dB, that is $\Delta T_i$ = 40 ($i$=1,2,...,$N$).

In step 403, the eNB at the network side may control the RRH to which the UE accesses to transmit the path loss compensation value $\Delta PL$ to the UE. In an embodiment, the path loss compensation value may be informed to the UE in a semi-static manner. For example, it may be likewise informed to the UE in an RRC signaling-carrying manner. However, this embodiment is not limited thereto, and other signaling may be used for carrying the path loss compensation value, or a current resource may be continued to be used.

With the method for uplink power control provided by the embodiment of the present invention, the eNB estimates the path loss compensation value of the RRH UE by triggering the RRH UE to transmit aperiodic SRSs, and informs the RRH UE in a semi-static manner, so that the UE compensates for the inaccuracy of estimation of path loss on the basis of the original uplink power control performed according to the path loss estimated based on the downlink CRSs, thereby ensuring the efficiency of power control.

An embodiment of the present invention further provides UE, as described in Embodiment 3 below. As the principle of the UE for solving problem is similar to that of the method for uplink power control in Embodiment 1, the implementation of the method may be referred to for the implementation of the UE, and the repeated parts shall not be described any further.

Embodiment 3

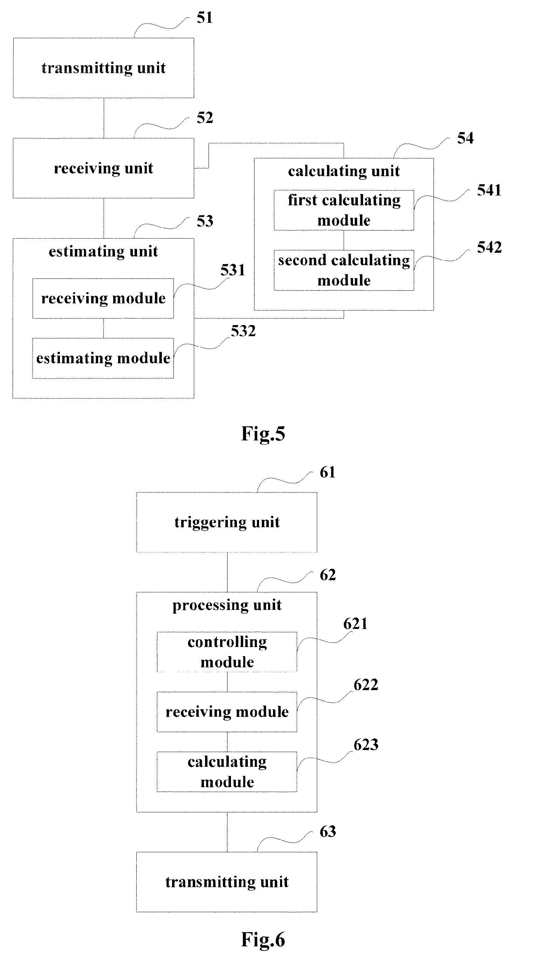

Fig. 5 is a schematic diagram of the structure of UE provided by an embodiment of the present invention. Referring to Fig. 5, the UE includes:

a transmitting unit 51 configured to transmit a sounding reference signal (SRS) to a network side according to a received triggering signal;
a receiving unit 52 configured to receive a path loss compensation value calculated by the network side based on the SRS and transmitted by the network side;
an estimating unit 53 configured to estimate a path loss value according to a received cell-specific reference signal (CRS); and
a calculating unit 54 to perform power compensation according to the path loss compensation value and the path loss value.

In an embodiment, the estimating unit 53 includes:

a receiving module 531 configured to receive the cell-specific reference signals (CRS) transmitted by all the transmitting points of the network side; and
an estimating module 532 configured to estimate the path loss value according to reference signal receiving power (RSRP) of the CRS and a system message;
wherein the system message represents a power for transmitting the CRS by an eNB of the network side.

In an embodiment, the calculating unit 54 is used to perform power compensation for a physical uplink control channel (PUCCH) or for a physical uplink shared channel (PUSCH) according to the path loss compensation value and the path loss value.

In an embodiment, the calculating unit 54 includes:

a first calculating module 541 configured to perform power compensation for the PUSCH according to the path loss compensation value and the path loss value by using the following formula:

$$P_{\mathrm{PUSCH}} = \min(P_{\max}, 10\log_{10} M + P_{\mathrm{O\_PUSCH}} + \alpha \cdot (PL + \Delta PL) + \Delta_{\mathrm{TF}} + f(i));$$

where, $P_{\max}$ is configured maximum transmission power of the user equipment(UE), M is the number of resource block (RB) allocated for the user equipment, $P_{\mathrm{O\_PUSCH}}$ is a sum of a cell-specific parameter $P_{\mathrm{O\_NOMINAL\_PUSCH}}$ provided from a higher layer and a UE-specific parameter $P_{\mathrm{O\_UE\_PUSCH}}$, $\alpha$ is a 3-bit path loss compensation factor, $PL$ is the path loss value, $\Delta PL$ is the path loss compensation value, $\Delta_{\mathrm{TF}}$ is a parameter related to the uplink transmission format of the user equipment, and $f(i)$ is a close-loop power control factor in the uplink power control, for adjusting the uplink power of the UE slightly, so as to reach a faster adaptive channel condition.

In another embodiment, the calculating unit 54 includes:

a second calculating module 542 configured to perform power compensation for the power of the PUCCH according to the path loss compensation value and the path loss value by using the following formula:

$$P_{\text{PUCCH}}(i) = \min \begin{cases} P_{\text{CMAX}}, \\ P_{\text{O\_PUCCH}} + (PL + \Delta PL) + h\left(n_{CQI}, n_{HARQ}, n_{SR}\right) + \Delta_{\text{F\_PUCCH}}(F) + \Delta_{TxD}(F') + g(i) \end{cases};$$

where, $P_{\text{CMAX}}$ is maximum transmission power of the user equipment, $\Delta_{\text{F\_PUCCH}}(F)$ and $\Delta_{TxD}(F')$ are messages informed by the higher layer, $h(n_{CQI}, n_{HARQ}, n_{SR})$ is a parameter related to the format of the PUCCH, $P_{\text{O\_PUCCH}}$ is a sum of a cell-specific parameter $P_{\text{O\_NOMINAL\_PUCCH}}$ and a UE-specific parameter $P_{\text{O\_UE\_PUCCH}}$, $g(i)$ is a close-loop control factor, $PL$ is the path loss value, and $\Delta PL$ is the path loss compensation value.

With the UE of this embodiment of the present invention, the UE aperiodically transmits SRSs to the network side according to the aperiodic triggering signals from the network side, then receives the path loss compensation value estimated by the network side, and performs the power compensation according to the path loss compensation value on the basis of the original uplink power control performed according to the path loss estimated based on the downlink CRSs, thereby compensating for the inaccuracy of estimation of path loss and ensuring the efficiency of power control.

An embodiment of the present invention further provides a base station, as described in Embodiment 4 below. As the principle of the base station for solving problem is similar to that of the method for downlink power control in Embodiment 2, the implementation of the method may be referred to for the implementation of the base station, and the repeated parts shall not be described any further.

Embodiment 4

Fig. 6 is a schematic diagram of the structure of a base station provided by an embodiment of the present invention. Referring to Fig. 6, the base station includes:

a triggering unit 61 configured to control a remote radio head (RRH) accessed by user equipment (UE) to aperiodically trigger the UE to transmit a sounding reference signal (SRS);
a processing unit 62 configured to calculate a path loss compensation value according the power for receiving the SRS; and
a transmitting unit 63 configured to control the RRH to which the UE accesses to transmit the path loss compensation value to the UE, so that the UE performs power compensation according to the path loss compensation value and an estimated path loss value.

In an embodiment, the triggering unit 61 is used to control the RRH to which the UE accesses to aperiodically transmit a triggering signal to the UE, so as to trigger aperiodically the UE to transmit the SRS.

In an embodiment, the processing unit 62 includes:

a controlling module 621 configured to control at least one RRH having the same cell ID as that of the eNB to receive the SRS transmitted by the UE;
a receiving module 622 configured to receive the SRS and the power transmitted by the at least one RRH for receiving the SRS; and
a calculating module 623 configured to calculate the path loss compensation value according to the power for receiving the SRS and the power of each RRH for receiving the SRS.

In an embodiment, the UE accesses to RRH 1 in an uplink, that is, the UE is RRH 1 UE, and the calculating module 623 is used to calculate the path loss compensation value according to the following formula:

$$\Delta PL = \frac{PL_1^{linear}}{PL_{estimate}^{linear}} = \frac{Rx_0}{Rx_{RRH1}} + \frac{1}{\Delta T_1} + \frac{1}{\Delta T_i} \sum_{i=2}^{N} \frac{Rx_{RRHi}}{Rx_{RRH1}}$$

where, $Rx_0$ is a power value of the eNB for receiving the SRS transmitted by the UE, $Rx_{RRHi}$ ($i$ =1,2,...$N$) is power of the *i-th* RRH for receiving the SRS transmitted by the user equipment, and $\Delta T_i = \dfrac{Tx_0^{\ linear}}{Tx_{RRH_i}^{\ linear}}$ denotes a ratio of the power of the eNB for transmitting the CRS and the power of the *i-th* RRH for transmitting the CRS.

In an embodiment, the transmitting unit 63 is used to control the RRH accessed by the UE to inform the path loss compensation value to the UE in a semi-static manner.

With the base station provided by this embodiment of the present invention, the base station estimates the path loss compensation value of the UE by controlling the RRH to which the UE accesses to trigger the UE (RRH UE) to transmit aperiodic SRSs, and controls the RRH to inform the UE with the path loss compensation value in a semi-static manner, so that the UE compensates for the inaccuracy of estimation of path loss on the basis of the original uplink power control performed according to the path loss estimated based on the downlink CRSs, thereby ensuring the efficiency of power control.

An embodiment of the present invention further provides a computer-readable program, wherein when the program is executed in user equipment, the program enables a computer to carry out the method for uplink power control as described in Embodiment 1 in the user equipment.

An embodiment of the present invention further provides a storage medium in which a computer-readable program is stored, wherein the computer-readable program enables a computer to carry out the method for uplink power control as described in Embodiment 1 in user equipment.

An embodiment of the present invention further provides a computer-readable program, wherein when the program is executed in a base station, the program enables a computer to carry out the method for uplink power control as described in Embodiment 2 in the base station.

An embodiment of the present invention further provides a storage medium in which a computer-readable program is stored, wherein the computer-readable program enables a computer to carry out the method for uplink power control as described in Embodiment 2 in a base station.

The above apparatuses and methods of the present invention may be implemented by hardware, or by hardware in combination with software. The present invention relates to such a computer-readable program that when the program is executed by a logic device, the logic device is enabled to carry out the apparatus or components as described above, or to carry out the methods or steps as described above. The present invention also relates to a storage medium for storing the above program, such as a hard disk, a floppy disk, a CD, a DVD, and a flash memory, etc.

The present invention is described above with reference to particular embodiments. However, it should be understood by those skilled in the art that such a description is illustrative only, and not intended to limit the protection scope of the present invention. Various variants and modifications may be made by those skilled in the art according to the spirits and principle of the present invention, and such variants and modifications fall within the scope of the present invention.

**Claims**

1. A method for uplink power control, comprising:

   transmitting, by user equipment, a sounding reference signal (SRS) to a network side according to a received triggering signal;
   receiving, by the user equipment, a path loss compensation value calculated by the network side based on the SRS and transmitted by the network side;
   estimating, by the user equipment, a path loss value according to a received cell-specific reference signal (CRS); and
   performing, by the user equipment, power compensation according to the path loss compensation value and the path loss value.

2. The method according to claim 1, wherein the step of estimating by the user equipment a path loss value according to a received cell-specific reference signal comprises:

   receiving, by the user equipment, the cell-specific reference signals transmitted by all the transmitting points of the network side; and
   estimating, by the user equipment, the path loss value according to reference signal receiving power (RSRP) of the CRS and a system message;
   wherein the system message is the power used to transmit the CRS by an eNB of the network side.

**3.** The method according to claim 1, wherein the step of performing by the user equipment power compensation according to the path loss compensation value and the path loss value comprises:

performing power compensation for a physical uplink control channel (PUCCH) or for a physical uplink shared channel(PUSCH) by the user equipment according to the path loss compensation value and the path loss value.

**4.** The method according to claim 3, wherein the user equipment performs power compensation for the PUSCH according to the path loss compensation value and the path loss value by using the following formula:

$$P_{\text{PUSCH}} = \min(P_{\max}, 10\log_{10} M + P_{\text{O\_PUSCH}} + \alpha \cdot (PL + \Delta PL) + \Delta_{\text{TF}} + f(i));$$

where, $P_{\max}$ is configured maximum transmission power of the user equipment (UE), $M$ is the number of resource blocks (RBs) allocated to the user equipment, $P_{\text{O\_PUSCH}}$ is a sum of a cell-specific parameter $P_{\text{O\_NOMINAL\_PUSCH}}$ provided by a higher layer and a UE-specific parameter $P_{\text{O\_UE\_PUSCH}}$, $\alpha$ is a 3-bit path loss compensation factor, $PL$ is the path loss value, $\Delta PL$ is the path loss compensation value, $\Delta_{\text{TF}}$ is a parameter related to the uplink transmission format of the user equipment, and $f(i)$ is a close-loop power control factor in the uplink power control.

**5.** The method according to claim 3, wherein the user equipment performs compensation for the PUCCH according to the path loss compensation value and the path loss value by using the following formula:

$$P_{\text{PUCCH}}(i) = \min \begin{cases} P_{\text{CMAX}}, \\ P_{\text{O\_PUCCH}} + (PL + \Delta PL) + h\left(n_{CQI}, n_{HARQ}, n_{SR}\right) + \Delta_{\text{F\_PUCCH}}\left(F\right) + \Delta_{TxD}(F') + g(i) \end{cases};$$

where, $P_{\text{CMAX}}$ is maximum transmission power of the user equipment, $\Delta_{\text{F\_PUCCH}}(F)$ and $\Delta_{TxD}(F')$ are messages informed by the higher layer, $h(n_{CQI}, n_{HARQ}, n_{SR})$ is s a parameter related to the format of PUCCH, $P_{\text{O\_PUCCH}}$ is a sum of a cell-specific parameter $P_{\text{O\_NOMINAL\_PUCCH}}$ and a user equipment-specific parameter $P_{\text{O\_UE\_PUCCH}}$, $g(i)$ is a close-loop control factor, $PL$ is the path loss value, and $\Delta PL$ is the path loss compensation value.

**6.** A method for uplink power control, comprising:

a triggering step: transmitting aperiodically by a network side a triggering signal to user equipment, so as to trigger the user equipment to transmit a sounding reference signal (SRS);
a processing step: receiving by the network side the SRS transmitted by the user equipment and calculating a path loss compensation value based on the SRS; and
a transmitting step: transmitting by the network side the path loss compensation value to the user equipment, so that the user equipment performs power compensation according to the path loss compensation value and an estimated path loss value.

**7.** The method according to claim 6, wherein the triggering step comprises:

controlling, by an eNB of the network side, a remote radio head (RRH) accessed by the user equipment to aperiodically transmit the triggering signal to the user equipment.

**8.** The method according to claim 6, wherein the processing step comprises:

receiving by the eNB of the network side the SRS and controlling at least one RRH having the same cell ID as that of the eNB to receive the SRS;
transmitting, by the at least one RRH of the network side, power for receiving the SRS to the eNB of the network side; and
calculating, by the eNB of the network side, the path loss compensation value according to the power for receiving the SRS and the power of each RRH for receiving the SRS.

9. The method according to claim 8, wherein the step of calculating by the eNB of the network side the path loss compensation value according to the power for receiving the SRS and the power of each RRH for receiving the SRS comprises:

calculating by the eNB of the network side the path loss compensation value according to the following formula:

$$\Delta PL = \frac{PL_1^{linear}}{PL_{estimate}^{linear}} = \frac{Rx_0}{Rx_{RRH1}} + \frac{1}{\Delta T_1} + \frac{1}{\Delta T_i} \sum_{i=2}^{N} \frac{Rx_{RRHi}}{Rx_{RRH1}}$$

where, RRH1 is the RRH accessed by the use equipment, $Rx_0$ is a power value of the eNB for receiving the SRS transmitted by the user equipment, $Rx_{RRHi}(i=1,2,...N)$ is power of the ith RRH for receiving the SRS transmitted by the user equipment, and $\Delta T_i = \frac{Tx_0^{linear}}{Tx_{RRH_i}^{linear}}$ denotes a ratio of the power of the eNB for transmitting the CRS and the power of the ith RRH for transmitting the CRS.

10. The method according to claim 6, wherein the transmitting step comprises:

controlling, by the eNB of the network side, the RRH accessed by the user equipment to inform the path loss compensation value to the user equipment in a semi-static manner.

11. User equipment, comprising:

a transmitting unit configured to transmit a sounding reference signal (SRS) to a network side according to a received triggering signal;
a receiving unit configured to receive a path loss compensation value calculated by the network side based on the SRS and transmitted by the network side;
an estimating unit configured to estimate a path loss value according to a received cell-specific reference signal (CRS); and
a calculating unit configured to perform power compensation according to the path loss compensation value and the path loss value.

12. The user equipment according to claim 11, wherein the estimating unit comprises:

a receiving module configured to receive the cell-specific reference signals transmitted by all the transmitting points of the network side; and
an estimating module configured to estimate the path loss value according to reference signal receiving power (RSRP) of the CRS and a system message;
wherein the system message is the power used to transmit the CRS by an eNB of the network side.

13. The user equipment according to claim 11, wherein the calculating unit is used to perform power compensation for a physical uplink control channel (PUCCH) or for a physical uplink shared channel (PUSCH) according to the path loss compensation value and the path loss value.

14. The user equipment according to claim 13, wherein the calculating unit comprises:

a first calculating module configured to perform power compensation for the power of the PUSCH according to the path loss compensation value and the path loss value by using the following formula:

$$P_{\text{PUSCH}} = \min(P_{\max}, 10\log_{10} M + P_{\text{O\_PUSCH}} + \alpha \cdot (PL + \Delta PL) + \Delta_{\text{TF}} + f(i));$$

where, $P_{max}$ is configured maximum transmission power of the user equipment(UE), $M$ is the number of resource block (RB) allocated for the user equipment, $P_{O\_PUSCH}$ is a sum of a cell-specific parameter $P_{O\_NOMINAL\_PUSCH}$ provided by a higher layer and a UE-specific parameter $P_{O\_UE\_PUSCH}$, $\alpha$ is a 3-bit path loss compensation factor, $PL$ is the path loss value, $\Delta PL$ is the path loss compensation value, $\Delta_{TF}$ is a parameter related to the uplink transmission format of the user equipment, and $f(i)$ is a close-loop power control factor in the uplink power control.

**15.** The user equipment according to claim 13, wherein the calculating unit comprises:

a second calculating module configured to perform power compensation for the PUCCH according to the path loss compensation value and the path loss value by using the following formula:

$$P_{\mathrm{PUCCH}}(i) = \min \left\{ \begin{array}{l} P_{\mathrm{CMAX}}, \\ P_{\mathrm{O\_PUCCH}} + (PL + \Delta PL) + h\left(n_{CQI}, n_{HARQ,} n_{SR}\right) + \Delta_{\mathrm{F\_PUCCH}}(F) + \Delta_{TxD}(F') + g(i) \end{array} \right\};$$

where, $P_{CMAX}$ is maximum transmission power of the user equipment, $\Delta_{F\_PUCCH}(F)$ and $\Delta_{TxD}(F')$ are messages informed by the higher layer, $h(n_{CQI}, n_{HARQ}, n_{SR})$ is s a parameter related to the format of PUCCH, $P_{O\_PUSCH}$ is a sum of a cell-specific parameter $P_{O-NOMINAL\_PUSCH}$ and a user equipment-specific parameter $P_{O\_UE\_PUSCH}$, $g(i)$ is a close-loop control factor, $PL$ is the path loss value, and $\Delta PL$ is the path loss compensation value.

**16.** A base station, comprising:

a triggering unit configured to control a remote radio head (RRH) accessed by user equipment to aperiodically trigger the user equipment to transmit a sounding reference signal (SRS);
a processing unit configured to calculate a path loss compensation value according power for receiving the SRS; and
a transmitting unit configured to transmit the path loss compensation value to the user equipment, so that the user equipment performs power compensation according to the path loss compensation value and an estimated path loss value.

**17.** The base station according to claim 16, wherein the triggering unit is used to control the RRH accessed by the user equipment to aperiodically transmit a triggering signal to the user equipment, so as to trigger aperiodically the user equipment to transmit the SRS.

**18.** The base station according to claim 16, wherein the processing unit comprises:

a controlling module configured to control at least one RRH having the same cell ID as that of the eNB to receive the SRS;
a receiving module configured to receive the SRS and power transmitted by the at least one RRH for receiving the SRS; and
a calculating module configured to calculate the path loss compensation value according to the power for receiving the SRS and the power of each RRH for receiving the SRS.

**19.** The method according to claim 18, wherein the calculating module is used to calculate the path loss compensation value according to the following formula:

$$\Delta PL = \frac{PL_1^{linear}}{PL_{estimate}^{linear}} = \frac{Rx_0}{Rx_{RRH1}} + \frac{1}{\Delta T_1} + \frac{1}{\Delta T_i} \sum_{i=2}^{N} \frac{Rx_{RRHi}}{Rx_{RRH1}}$$

where, RRH1 is the RRH accessed by the use equipment, $Rx_0$ is a power value of the eNB for receiving the SRS transmitted by the user equipment, $Rx_{RRHi}(i=1,2,...N)$ is power of the $i$-th RRH for receiving the SRS transmitted by the user equipment, and $\Delta T_i = \dfrac{Tx_0^{linear}}{Tx_{RRH_i}^{linear}}$ denotes a ratio of the power of the eNB for transmitting the CRS and the power of the ith RRH for transmitting the CRS.

**20.** The base station according to claim 16, wherein the transmitting unit is used to control the RRH accessed by the user equipment to inform the path loss compensation value to the user equipment in a semi-static manner.

**21.** A computer-readable program, wherein when the program is executed in user equipment, the program enables a computer to carry out the method for uplink power control as claimed in any one of claims 1-5 in the user equipment.

**22.** A storage medium in which a computer-readable program is stored, wherein the computer-readable program enables a computer to carry out the method for uplink power control as claimed in any one of claims 1-5 in user equipment.

**23.** A computer-readable program, wherein when the program is executed in a base station, the program enables a computer to carry out the method for uplink power control as claimed in any one of claims 6-10 in the base station.

**24.** A storage medium in which a computer-readable program is stored, wherein the computer-readable program enables a computer to carry out the method for uplink power control as claimed in any one of claims 6-10 in a base station.

**Fig.1**

**Fig.2**

301

transmitting, by user equipment, a sounding reference signal
(SRS) to a network side according to a received triggering signal

302

receiving, by the user equipment, a path loss compensation value
calculated by the network side based on the SRS and transmitted
by the network side

303

estimating, by the user equipment, a path loss value according to
a received cell-specific reference signal (CRS)

304

performing, by the user equipment, power compensation
according to the path loss compensation value and the path loss
value

**Fig.3**

401

transmitting aperiodically by a network side a triggering signal
to user equipment, so as to trigger the user equipment to transmit
a sounding reference signal (SRS)

402

receiving by the network side the SRS transmitted by the user
equipment and calculating a path loss compensation value based
on the SRS

403

transmitting by the network side the path loss compensation
value to the user equipment, so that the user equipment performs
power compensation according to the path loss compensation
value and an estimated path loss value

**Fig.4**

51

transmitting unit

52

receiving unit

54

calculating unit

541

first calculating module

542

second calculating module

53

estimating unit

531

receiving module

532

estimating module

**Fig.5**

61

triggering unit

62

processing unit

621

controlling module

622

receiving module

623

calculating module

63

transmitting unit

**Fig.6**

## INTERNATIONAL SEARCH REPORT

| International application No. |
|---|
| **PCT/CN2011/078330** |

**A. CLASSIFICATION OF SUBJECT MATTER**

H04W 52/04 (2009.01) i

According to International Patent Classification (IPC) or to both national classification and IPC

**B. FIELDS SEARCHED**

Minimum documentation searched (classification system followed by classification symbols)

IPC: H04W, H04Q

Documentation searched other than minimum documentation to the extent that such documents are included in the fields searched

Electronic data base consulted during the international search (name of data base and, where practicable, search terms used)

CNTXT, VEN: SRS, sounding reference signal, CRS, cell special reference signal, compensation, PUSCH, RSRP, reference signal received power, path loss compensation, remote radio head, remote, radio, head, RRH, power, pathloss, path, loss, uplink

**C. DOCUMENTS CONSIDERED TO BE RELEVANT**

| Category* | Citation of document, with indication, where appropriate, of the relevant passages | Relevant to claim No. |
|---|---|---|
| X | CN 102056178 A (NEW POSTCOM EQUIPMENT CO., LTD.), 11 May 2011 (11.05.2011), description, paragraphs [0029]-[0042] | 1-3, 6-8, 10-13, 16-18, 20-24 |
| A | The same as above | 4, 5, 9, 14, 15, 19 |
| X | CN 102056218 A (ZTE CORP.), 11 May 2011 (11.05.2011), description, paragraphs [0044]-[0065] | 1-3, 6-8, 10-13, 16-18, 20-24 |
| A | The same as above | 4, 5, 9, 14, 15, 19 |
| A | CN 101662824 A (BEIJING UNIVERSITY OF POSTS AND TELECOMMUNICATIONS), 03 March 2010 (03.03.2010), the whole document | 4, 5, 9, 14, 15, 19 |
| A | CN 101902750 A (DATANG MOBILE COMMUNICATIONS EQUIPMENT CO., LTD.), 01 December 2010 (01.12.2010), the whole document | 4, 5, 9, 14, 15, 19 |
| A | CN 101883415 A (DATANG MOBILE COMMUNICATIONS EQUIPMENT CO., LTD.), 10 November 2010 (10.11.2010), the whole document | 4, 5, 9, 14, 15, 19 |

☐ Further documents are listed in the continuation of Box C.  ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 02 May 2012 (02.05.2012) | **24 May 2012 (24.05.2012)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **MA, Yingying** Telephone No.: (86-10) **62411362** |
|---|---|

Form PCT/ISA/210 (second sheet) (July 2009)

## INTERNATIONAL SEARCH REPORT
### Information on patent family members

| International application No. |
| --- |
| **PCT/CN2011/078330** |

| Patent Documents referred in the Report | Publication Date | Patent Family | Publication Date |
| --- | --- | --- | --- |
| CN 102056178 A | 11.05.2011 | None | |
| CN 102056218 A | 11.05.2011 | WO 2010145411 A1 | 23.12.2010 |
| CN 101662824 A | 03.03.2010 | None | |
| CN 101902750 A | 01.12.2010 | None | |
| CN 101883415 A | 10.11.2010 | US 2012052904 A1 | 01.03.2012 |
| | | WO 2010127623 A1 | 11.11.2010 |
| | | KR 20120005539 A | 16.01.2012 |
| | | EP 2429244 A1 | 14.03.2012 |

Form PCT/ISA/210 (patent family annex) (July 2009)